Europäisches Patentamt

**European Patent Office**

**Office européen des brevets**

(11) Numéro de publication: **0 333 044 B1**

(12) **FASCICULE DE BREVET EUROPEEN**

(45) Date de publication de fascicule du brevet: **21.07.93** (51) Int. Cl.5: **H04L 27/22**

(21) Numéro de dépôt: **89104225.1**

(22) Date de dépôt: **09.03.89**

(54) **Dispositif de synchronisation en modulation de phase a quatre etats decalée.**

(30) Priorité: **15.03.88 FR 8803334**

(43) Date de publication de la demande:
**20.09.89 Bulletin 89/38**

(45) Mention de la délivrance du brevet:
**21.07.93 Bulletin 93/29**

(84) Etats contractants désignés:
**AT BE CH DE ES FR GB IT LI NL SE**

(56) Documents cités:
**US-A- 4 313 205**

**INSTITUTE OF ELECTRICAL AND ELECTRO-
NICS ENGINEERS, NATIONAL TELECOMMU-
NICATIONS CONFERENCE, San Diego, 2-4
décembre 1974, pages 937-946, IEEE, New
YorK, US; S.A. RHODES: "Carrier synchronization techniques for offset-Opsk signals"**

(73) Titulaire: **ALCATEL TELSPACE
5, rue Noel Pons
F-92734 Nanterre Cédex(FR)**

(84) Etats contractants désignés:
**DE ES FR GB IT NL SE**

(73) Titulaire: **ALCATEL N.V.
Strawinskylaan 535
NL-1077 XX Amsterdam(NL)**

(84) Etats contractants désignés:
**BE CH LI AT**

(72) Inventeur: **Sehier, Philippe
148, rue du Président Wilson
F-92300 Levallois Perret(FR)**

(74) Mandataire: **Weinmiller, Jürgen et al
Lennéstrasse 9 Postfach 24
W-8133 Feldafing (DE)**

Rank Xerox (UK) Business Services
(3.10/3.6/3.3.1)

## Description

L'invention se rapporte à un dispositif de synchronisation en modulation de phase à quatre états décalée.

L'invention concerne la démodulation cohérente de signaux modulés suivant une modulation de type OQPSK ("Offset Quaternary Phase Shift keying") ou en français : MDP4 (Modulation de phase à quatre états) décalée, cette classe de modulations comprenant le cas important de la MSK ("Minimum Shift Keying").

Ce type de modulation est de plus en plus employé pour la transmission sur faisceaux hertziens car elle présente des avantages importants, parmi lesquels celui de présenter une enveloppe constante.

Le dispositif de l'invention permet d'effectuer, de façon performante et simple, la synchronisation en phase nécessaire à la démodulation cohérente. En effet, la qualité d'un tel dispositif influe de façon importante sur les performances en taux d'erreurs du récepteur.

La synchronisation en phase pour des modulations de type OQPSK pose des problèmes qui n'existent pas pour les autres modulations comparables (QPSK ("Quaternary Phase Shift Keying"), et BPSK ("Binary Phase Shift Keying" ou MDP2 c'est à dire "modulation de Phase à deux états").

Il existe plusieurs types de dispositifs permettant la synchronisation en phase pour cette classe de modulation de type OQPSK.

Les plus voisins seront désignés de la façon suivante :

DD : "Decision Directed"
Dans lesquels la décision sur les symboles est utilisée dans le calcul du signal d'erreur permettant d'asservir la boucle. Le document INSTITUTE OF ELECTRICAL AND ELECTRONICS ENGINEERS; NATIONAL TELECOMMUNICATIONS CONFERENCE 1974, pages 937 à 944 decrit un exemple de réalisation d'un tel dispositif qui comprend un démodulateur quatre phases, un circuit de calcul de l'erreur de phase et un circuit de calcul de l'erreur de rythme.

NDD : "Non décision Directed"
Dans lesquels cette décision n'est pas utilisée.

Le dispositif NDD donne de moins bonnes performances (suivant le critère de la variance résiduelle de l'erreur de phase) que le dispositif DD.

Le dispositif de l'invention utilise les décisions et sera donc désigné dans ce qui suit par :

MDD : "Modified Décision Directed".

Dans les dispositifs DD et NDD, il existe un bruit résiduel de l'erreur de phase d'origine non thermique et irréductible à bande de boucle fixée. C'est-à-dire que, lorsque le rapport signal à bruit tend vers l'infini, il subsiste une fluctuation non nulle de l'erreur de phase, entrainant un taux d'erreur résiduel.

Ce bruit résiduel peut être arbitrairement réduit en diminuant la bande de boucle, mais alors le système n'est plus capable de suivre les modulations aléatoires dues principalement aux oscillateurs locaux situés à l'émission et à la réception, cela justifie l'intérêt d'une bande de boucle grande et pouvant être rendue éventuellement adaptative en fonction du rapport signal/bruit.

L'invention permet de réduire fortement ce bruit résiduel et de l'annuler totalement dans le cas particulier de la modulation MSK.

L'invention propose, donc, un dispositif de synchronisation en modulation de phase à quatre états décalée, dont les caractéristiques sont définies dans les revendications.

L'invention permet une simplification important de l'estimateur d'erreur de phase et de l'estimateur d'erreur de rythme.

Les caractéristiques et avantages de l'invention ressortiront d'ailleurs de la description qui va suivre, à titre d'exemple non limitatif, en référence aux figures annexées sur lesquelles :

- la figure 1 représente schématiquement le dispositif selon l'invention ;
- la figure 2 représente schématiquement une variante du dispositif selon l'invention.

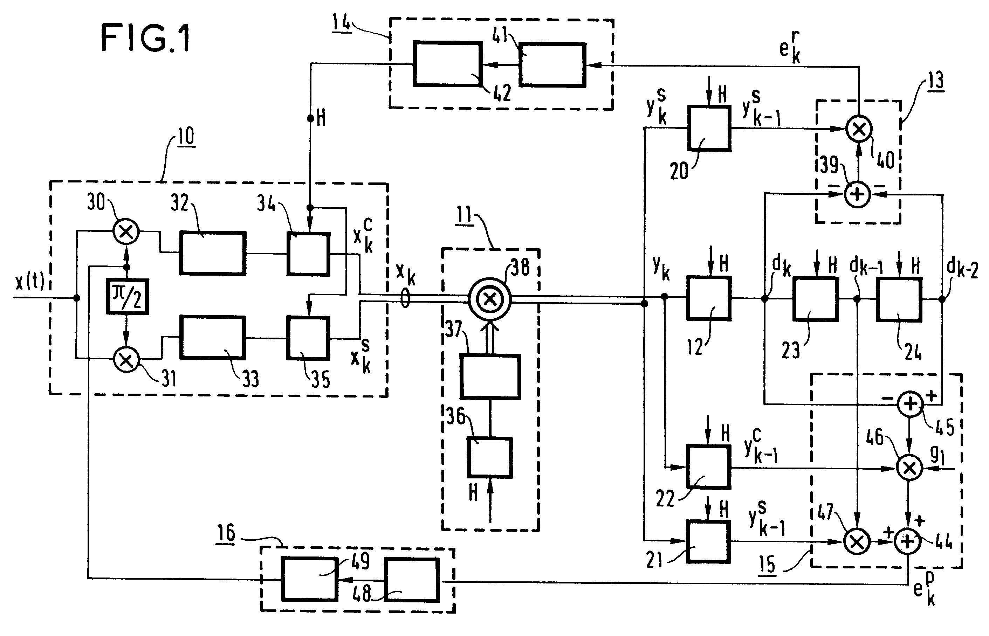

Le dispositif selon l'invention, tel que représenté sur la figure 1, comprend :

- un démodulateur 10 qui est un démodulateur quatre phases,
- un module de traitement qui comprend un module 11 permettant une multiplication par $(-j)^k$, k étant le numéro de l'échantillon, et un circuit de décision 12 qui permet d'obtenir le signe de la partie réelle du signal $y_k$ qui sort du module précédent 11,
- un circuit de calcul de l'erreur de rythme 13 suivi d'un circuit de correction 14 qui délivre une horloge H de commande,
- un circuit de calcul de l'erreur de phase 15 suivi d'un circuit de correction 16 qui délivre un signal de correction d'erreur de phase.

Le démodulateur 10 est un démodulateur à quatre états de phase classique dans lequel le signal x(t) en fréquence intermédiaire ou en hyperfréquence, en démodulation directe, est séparé en deux signaux, selon une voie réelle et une voie imaginaire, qui comportent respectivement un modulateur en anneau 30 (31), un filtre 32 (33), un circuit d'échantillonnage 34 (35) qui est un convertisseur analogique-numérique.

On obtient en sortie de ce démodulateur un signal $x_k$ ayant une composante réelle $x_k^c$ et une composante imaginaire $x_k^s$ : tel que $x_k = x_k^c + jx_k^s$.

Ce démodulateur quatre phases 10 est représenté ici pour situer le dispositif de synchronisation dans la chaîne de réception.

Le signal issu des voies réelle et imaginaire est numérisé au rythme bit H, les échantillons obtenus étant considérés comme complexes.

Le module de traitement comporte un compteur 36 modulo 4 suivi d'un multiplieur 37 permettant d'obtenir la valeur $(-j)^k$ qui est entrée sur le multiplicateur complexe 38, à la sortie duquel on obtient donc $y_k = (-j)^k x_k = y_k^c + j y_k^s$.

Ainsi ce module de traitement permet à partir d'échantillons $x_k$ intéressants alternés sur les deux voies de :
- ramener tous les échantillons utiles ($y_k^c$) (variables de décision) sur la voie réelle ;
- ramener les échantillons intéressants ($y_k^s$) pour la synchronisation de rythme et de phase sur la voie imaginaire.

Ainsi les échantillons $x_k$ sont multipliés par $(-j)^k$ ; k étant généré par un compteur modulo 4, incrémenté au rythme bit. La multiplication (38) est réalisée par un ensemble de circuits logiques.

Le circuit de décision 12 permet d'obtenir le signal $d_k$ qui est le signe de la partie réelle de $y_k$, ce signe constitue la décision sur les symboles émis (au décodage différentiel près).

Les circuits 20, (21), 22, 23, 24 sont des circuits retard d'un temps bit qui permettent d'obtenir, à partir respectivement de signaux $y_k^s$, $y_k^c$, $d_k$ et $d_{k-1}$ des signaux $y_{k-1}^s$, $y_{k-1}^c$, $d_{k-1}$ et $d_{k-2}$.

Les circuits retard 23, 24 et le circuit de décision 12 peuvent être réalisés respectivement, par exemple, à l'aide d'une bascule D.

Par contre les circuits retard 20, 21 et 22 qui permettent d'obtenir respectivement $y_{k-1}^s$, $y_{k-1}^s$ et $y_{k-1}^c$ peuvent être réalisés par n bascules D en parallèle (n étant un nombre qui dépend du nombre de bits en sortie des convertisseurs 34 et 35).

Le circuit 13 de calcul de l'erreur de rythme, comportant un additionneur 34 et un multiplieur 40, permet de calculer la tension d'erreur de la boucle de rythme : $e_k^r = -y_{k-1}^s \cdot (d_k + d_{k-2})$ qui est entrée dans le circuit de correction 14 formé d'un filtre 41 suivi d'un VCO 42 ("Voltage controlled oscillator") qui délivre une horloge H de commande notamment de tous les circuits synchrones.

Dans le module 11 de multiplication du signal complexe par $(-j)^k$ , k est incrémentée à chaque période de l'horloge à la fréquence bit. Cette opération permet d'obtenir toutes les variables de décision sur la voie réelle (comme en BPSK) alors que ces variables sont, avant multiplication, réparties sur la voie réelle aux instants 2.k.T et sur la voie imaginaire aux instants 2 (K+1).T (où T représente le temps bit).

Cette opération permet de diminuer de façon importante la complexité des dispositifs aval et, en particulier, les dispositifs de synchronisation de phase et de rythme.

La boucle d'asservissement de l'horloge rythme fonctionne selon le principe connu dit "avance-retard". Toutefois ce dispositif prend une forme particulièrement simple grâce à la multiplication par $(-j)^k$.

Le circuit 15 de calcul de l'erreur de phase, comportant un additionneur 44, un soustracteur 45 et deux multiplieurs 46, 47, permet de calculer la tension d'erreur de la boucle de phase :

$$e_k^P = g_1 (d_{k-2} - d_k) y_{k-1}^C + d_{k-1} \cdot y_{k-1}^S$$

qui est envoyé sur le circuit de correction 16 qui comporte un filtre 48 suivi d'un VCO 49 ("Voltage Controlled oscillator") qui délivre une commande analogique de démodulateur 10.

$g_1 = g(T)$ où T représente le temps bit, et $g(t)$ est la réponse impulsionnelle de l'ensemble du filtrage subi par le signal ; $g(t)$ est supposé pair et vérifie le critère de Nyquist (soit $g(2kT) = 0$ pour k 0 et $g(0) = 1$).

En cas de modulation OQPSK on a g1 0,5 ce qui permet de simplifier la valeur de $e_k^P$ qui se réduit à une simple addition. Dans le cas de la modulation MSK, g1 $\simeq$ 0,13.

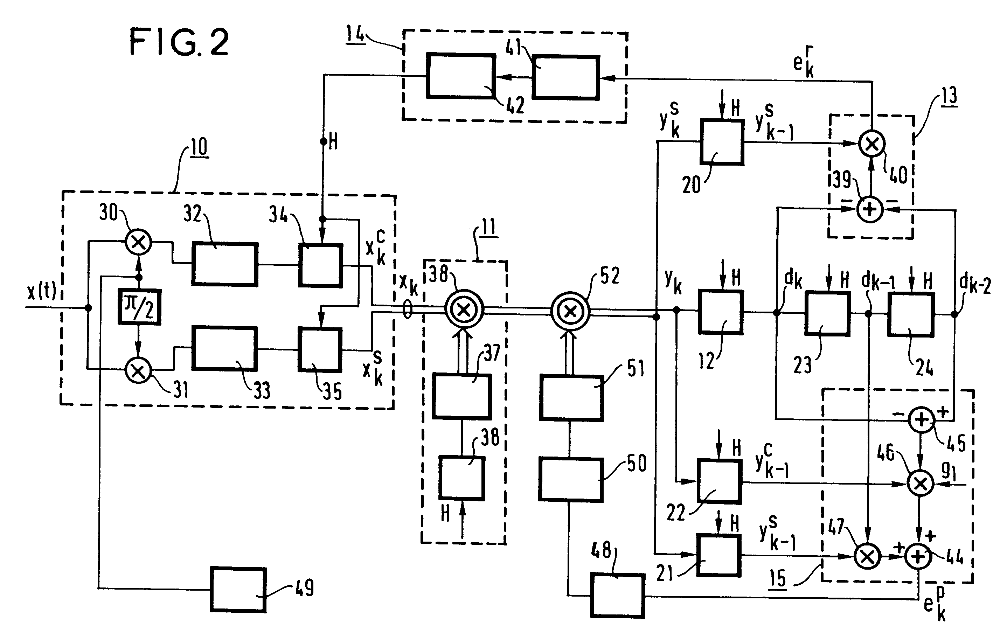

Sur la figure 2, les éléments identiques à ceux de la figure 1 ont conservé les mêmes références.

Dans cette variante du dispositif de l'invention, on opère la correction de boucle de phase sur les signaux échantillonnés.

Ainsi la tension d'erreur de phase $e_k^P$ est envoyée sur le filtre 48 dont la sortie est reliée à un intégrateur numérique 50 délivrant une valeur $\phi$ , suivi d'un circuit 51 de calcul de $e^{-j\phi}$ qui est entré sur un second multiplicateur complexe 52 disposé en sortie du premier multiplicateur complexe 38 cité précédemment.

Le circuit VCO, désolidarisé du filtre 48, n'est donc plus commandable en tension et forme donc alors un synthétiseur relié au démodulateur 10.

## Revendications

1. Un dispositif de synchronisation en modulation de phase à quatre états décalée, comprenant:
   - un démodulateur (10) quatre phases fournissant à sa sortie un signal complexe démodulé $x_k$, où l'indice k indique le numéro de échantillonnage du signal;
   - un premier circuit de calcul (15) de l'erreur de phase $e_k^P$, suivi d'un circuit de correction (16) qui délivre un signal de correction d'erreur de phase.

- un second circuit de calcul (13) de l'erreur de rythme $e^r_k$

caractérisé en ce qu'il comprend en outre un module de traitement comprenant un module de multiplication (11) qui multiple par $(-j)^k$ le signal $x_k$ pour fournir un signal complexe $y_k$ et un circuit de décision (12) qui permet d'obtenir un signal $d_k$ représentatif du signe de la composante réelle du signal $y_k$, et en ce que le premier circuit de calcul (15) est agencé pour fournir une erreur de phase $e^p_k$ donnée par la relation suivante:

$$e^p_k = g1.(d_{k-2} - d_k).y^c_{k-1} + d_{k-1}.y^s_{k-1}$$

où $y_k = (-j)^k.x_k = y^c_k + j.y^s_{k-1}$, $y^s_{k-1}$ représente le signal $y^s_k$ décalé d'un temps bit, $d_{k-2}$ et $d_{k-1}$ représentent respectivement le signal $d_k$ décalé de deux temps bit et d'un temps bit, et $g1 = g(T)$, T représentant le temps bit et $g(t)$ est la réponse impulsionnelle de l'ensemble de filtrage subi par le signal.

2. Le dispositif selon la revendication 1, dans lequel le second circuit de calcul (13) de l'erreur de rythme est agencé pour fournir une erreur de rythme donnée par la relation suivante:

$$e^r_k = -y^s_{k-1}.(d_k + d_{k-2}) \, .$$

3. Le dispositif selon l'une des revendications 1 ou 2, dans lequel l'erreur de phase $e^p_k$ commande un VCO (49) via un filtre (48) pour permettre la commande analogique du démodulateur (10).

4. Le dispositif selon l'une des revendications 1 ou 2, dans lequel l'erreur de phase $e^p_k$ est fournie à un multiplieur (52) via un filtre (48), un intégrateur numérique (50), délivrant un signal $\phi$, et un circuit (51) de calcul de $e^{-j\phi}$.

5. Dispositif selon la revendication 1, caractérisé en ce que le circuit de calcul de l'erreur de rythme (13) est suivi d'un circuit de correction (14) qui délivre une horloge H de commande.

## Claims

1. A synchronization device for offset quaternary phase shift keying, including:
   - a four phase quaternary demodulator (10) adapted to deliver a demodulated complex signal $x_k$ at its output, where index k indicates the sample number of the signal;

   - a first calculating circuit (15) for calculating the phase error $e^p_k$, followed by a correction circuit (16) which delivers a phase error correction signal;
   - a second calculating circuit (13) for calculating the clock error $e^r_k$;

   characterized in that the device further comprises a processing module which includes a multiplying module (11) adapted to multiply the signal $x_k$ by $(-j)^k$ in order to output a complex signal $y_k$, and a decision circuit (12) adapted to obtain a signal $d_k$ which is representative for the sign of the real part of the signal $y_k$; and in that the first calculating circuit (15) is arranged for outputting a phase error $e^p_k$ defined by the following relation:

   $$e^p_k = g1.(d_{k-2} - d_k).y^c_{k-1} + d_{k-1}.y^s_{k-1};$$

   where $y^s_{k-1}$ is equal to $y_k$ shifted by one bit time, with $y_k = (-j)^k.x_k = y^c_k + j.y^s_{k-1}$; $d_{k-2}$ and $d_{k-1}$ representing the signal $d_k$ shifted by two bit periods and by one bit period respectively, and $g1 = g(T)$, where T represents the bit period and $g(t)$ is the impulse response of the overall filtering to which the signal is subjected.

2. A device according to claim 1, in which the second phase error calculating circuit (13) is arranged to output a clock error defined by the relation:

   $$e^r_k = -y^s_{k-1}.(d_k + d_{k-2}).$$

3. A device according to claim 1 or 2, in which the phase error $e^p_k$ controls a VCO (49) via a filter (48) in order to permit the analog control of the demodulator (10).

4. A device according to claim 1 or 2, in which the phase error $e^p_k$ is applied to a multiplier (52) via a filter (48), a digital integrator (50) for delivering a signal $\phi$, and a circuit (51) for calculating $e^{-j\phi}$.

5. A device according to claim 1, characterized in that the clock error calculating circuit (13) is followed by a correction circuit (14) which delivers a control clock H.

## Patentansprüche

1. Einrichtung zur Synchronisation bei der versetzten quaternären Phasenmodulation, mit:
   - einem Vierphasendemodulator (10), der an seinem Ausgang ein demoduliertes komplexes Signal $x_k$ liefert, wobei der

Index k die Tastprobennummer des Signals ist;
- einer ersten Rechenschaltung (15) zur Berechnung des Phasenfehlers $eP_k$, an die sich eine Korrekturschaltung (16) anschließt, die ein Phasenfehlerkorrektursignal liefert;
- einer zweiten Rechenschaltung (13) zur Berechnung des Taktfehlers $e^r_k$;

dadurch gekennzeichnet, daß die Einrichtung weiter einen Verarbeitungsmodul mit einem Multipliziermodul (11), der das Signal $x_k$ mit $(-j)^k$ multipliziert und ein komplexes Signal $y_k$ liefert und eine Entscheidungsschaltung (12) aufweist, die die Ermittlung eines Signals $d_k$ ermöglicht, das das Vorzeichen des Realteils des Signals $y_k$ darstellt, und daß die erste Rechenschaltung (15) zur Lieferung eines Phasenfehlers $e^p_k$ ausgelegt ist, der durch folgende Beziehung bestimmt ist:

$$e^p_k = g1.(d_{k-2} - d_k).y^c_{k-1} + d_{k-1}.y^s_{k-1};$$

wobei $y_k = (-j)^k.x_k = y^c_k + j.y^s_{k-1}$ ist und $y^s_{k-1}$ das um eine Bitperiode verschobene Signal $y^s_k$ darstellt, $d_{k-2}$ bzw. $d_{k-1}$ das um zwei Bitperioden bzw. um eine Bitperiode verschobene Signal $d_k$ darstellt, und $g1 = g(T)$ ist, wobei T die Bitperiode ist und g(t) die Impulsantwort der Gesamtfilterung darstellt, die das Signal erfährt.

2. Einrichtung nach Anspruch 1, bei der die zweite Rechenschaltung (13) zur Berechnung des Taktfehlers für die Lieferung eines Taktfehlers ausgelegt ist, der durch die folgende Beziehung bestimmt ist:

$$e^r_k = -y^s_{k-1}.(d_k + d_{k-2}).$$

3. Einrichtung nach Anspruch 1 oder 2, bei der der Phasenfehler $e^p_k$ zur Ermöglichung der Analogsteuerung des Demodulators (10) über ein Filter (48) einen VCO (49) steuert.

4. Einrichtung nach Anspruch 1 oder 2, bei der der Phasenfehler $e^p_k$ über ein Filter (48), einen digitalen Integrierer (50), der ein Signal $\phi$ liefert, und eine Schaltung (51) zur Berechnung von $e^{-j\phi}$ an einen Multiplizierer (52) geliefert wird.

5. Einrichtung nach Anspruch 1, dadurch gekennzeichnet, daß an die Taktfehler-Rechenschaltung (13) eine Korrekturschaltung (14) angeschlossen ist, die einen Steuertakt H liefert.

# FIG.1

# FIG.2

EP 0 333 044 B1